# EUROPEAN PATENT SPECIFICATION

(11) **EP 1 522 969 B1**
(45) Date of publication and mention of the grant of the patent: **23.12.2015**
(21) Application number: 04023761.2
(22) Date of filing: 06.10.2004
(51) Int. Cl.: G06Q 50/32

(54) **System and method for automated mailing adress error detection and correction**
System und Verfahren zum automatisierten Erkennen und Korrigieren von Fehlern einer Versandanschrift
Système et procédé pour la détection et correction automatisée d'erreurs d'adresse postale

(30) Priority: 06.10.2003 US 508947 P; 21.07.2004 US 895559
(43) Date of publication of application: 13.04.2005
(73) Proprietor: Pitney Bowes Inc., Danbury, CT 06810 (US)
(72) Inventor: Cordery, Robert A., Monroe, CT 06468 (US); Pintsov, Leon A., West Hartford, CT 06117 (US)
(74) Representative: Hoffmann Eitle

(56) References cited:
- WO-A-02/093323
- US-A- 3 016 461
- US-A- 6 019 286
- US-A1- 2003 057 270
- US-A1- 2003 114 955

## Description

The invention relates generally to the field of mail delivery systems and, more particularly, to methods and systems for automatically correcting delivery address information.

Ever since the numeric codification of streets and buildings received general acceptance, an individual's name and the individual's household postal addresses have been linked. The sender of a letter, flat or package, i.e., mail, would deliver a letter, flat or package to the post, that had the correct recipient postal address, and the post would deliver the mail to the street address of the recipient of the mall. A correct recipient postal address for the delivery of the mail to the recipient included the name of the recipient; the street address of the recipient; the city and state of the recipient; and the postal zip code of the recipient. Currently in the United States, there are a total of 143,000,000 delivery points that are comprised of 20,000,000 United States Postal Service (USPS) post office boxes and 123,000,000 home and business delivery points.

Approximately three percent (3%) of letter and flat mail require redirection by the USPS due to incorrect address or inconsistency between the name of the addressee and the physical address. The cost for redirecting the mall significantly adds to the costs of the USPS's operations and adds to the time required to deliver the mail to the recipient.

People use address lists to address their mail, and major commercial mailers use computerized address lists to address their mail. Addresses always consist of two distinct parts: a first part for geographic physical location information, and a second part for personal information not necessarily in direct order when represented on a mall Item.

There are significant shifts in population due to migration. This results in continuous need for address data updates. The major difficulty with present postal addressing systems is that mallers (senders of mail) do not have real time access to up-to-date recipient address information. In addition, the method of obtaining computerized address information by commercial mailers frequently depends on oral communication with mail recipients resulting in multiple and difficult to correct errors. Thus, the major difficulty with present postal addressing systems is that mailers (senders of mail) do not have real time access to up-to-date computerized recipient address information.

The present invention overcomes the disadvantages of the prior art by enabling the mailer (sender) to automatically receive updated and computerized address information for automatic, real-time correction of address data in mailers' mailing lists.

Address information that is present in the address block of most mail items (except those that are intended for saturation impersonal mass mailings, sometimes referred to as 'unaddressed', for every possible address and, as such, do not contain the name of the intended recipient) consists of two distinctly different parts, namely, Personal Information (PI) and Geographic Information (GI).

PI may consist of the following data elements. At least some of them are necessarily present:
<recipient's name>
<recipient's title>
<company name>
<company division>
<department name>
<internal company location code>

GI may consist of the following data elements:
<vanity name>
<street range (number)>
<street name>
<city name>
<state/province/municipality name>
<Postal or ZIP code>
<Machine-readable postal code>
<country name>

PI by itself has no redundancy with regard to GI and vice-versa. That means that personal information cannot contradict or confirm geographic information and vice versa without access to data external to the mail piece. In other words, knowledge of PI does not reveal any knowledge of Gl and vice versa. Thus, PI and GI have to be treated separately and, yet, they both constitute inalienable parts of the postal/mailing address. A major source of problems with addressing systems is that a PI/GI combination creates an "undeliverable as addressed" mail item. Problems with addressing can be classified into three categories:

I. PI is internally inconsistent For example, there is no person identified by data identifier called <recipient name> that works for this company identified by the data called <company name>.

II. GI is internally inconsistent For example, there is no structure/house number identified by the data element <street range> on this street identified in the address by data element <street name>, or there is a mismatch between <city name> and <postal code>).

III. PI and GI are mutually inconsistent. For example person <recipient name> does not live at this address <street range> and <street name>.

Two fundamentally basic questions for any computerized addressing system are (1) how to detect address inconsistencies I, II and III; and (2), if it is possible to correct such detected inconsistencies. A process of detection and correction of inconsistencies requires analysis of what party has knowledge of correct information, and what is the best way to communicate this information to the source (sender) to avoid future inconsistencies.

internal inconsistencies in PI (type I inconsistencies) can be detected at the recipient site by the recipient or another party by comparing PI with a database of PI information where correct and up-to-date information is stored. Frequently, in smaller businesses and households, internal inconsistencies in PI can be detected informally by a human, since there is no computerized database of correct information. In such a case, there is no good automated process to perform corrective action by the sender barring the recipient typing and sending corrective information over, for example, the Internet. Since the consequences of PI inconsistencies in such scenario are insignificant (see discussion below), we do not consider this case. On the other hand, for a larger recipient's establishments where inconsistencies in PI may cause additional cost in internal mail sorting and delivery and where computerized databases of correct information are used, the process of automatic detection of PI inconsistencies and communication of corrective message to the sender can be effectively organized along the same lines as the process described below for the postal environment.

Internal inconsistencies in GI belong to two distinct classes. The first and typically less persistent type is inconsistency that can be detected solely based on the information available on the mail item. A typical example is a mismatch between human-readable <Postal or ZIP code> and <Machine-readable postal code>. The second type is the inconsistencies for example between <Postal or ZIP code> and <street range (number)>, <street name>, <city name>, <state/province/municipality name> that can be detected by using comparison with an appropriate entry in the national address database. Since information in GI is significantly redundant, most inconsistencies can be detected in this manner. Most larger mailers perform such detection and correction using specialized list-processing software frequently called "address hygiene" software. Small mailers sometimes mail items with inconsistent GI because they choose not to employ address hygiene software. Such mail items, if correctable, nevertheless are typically correctly sorted by postal sorting process using address hygiene software without notification to mailers. An embodiment of the present invention provides for such a notification.

Finally, mutual inconsistencies between PI and GI (type III inconsistencies) can be detected only either by comparison with National Change of Address Database (when an inconsistency resulted from planned and reported moves by intended mail recipients) or by capturing information that is local and resides "in the heads of carriers". In both cases, it is extremely desirable to detect inconsistencies and report a corrective message to senders to avoid future mail items with inconsistent addresses. This is also a subject of an embodiment of present invention.

It should be expressly noted that not all inconsistencies in the address information have equally serious manifestations for the mail communication system. Specifically, mail items that can not be delivered according to their destination address (known in the postal world as Auras or Undeliverable As Addressed) represent the most serious problem since they would have to be returned to the mailer (at no additional cost to the mailer, but with very significant cost to the postal operator) at least for some classes of service such as First Class, Priority or Express service. These are the problems of internally inconsistent GI. The UAAs typically appear as a result of GI internal inconsistencies that cannot be remedied even by using knowledge of local delivery situation available to mail carrier. On the other hand, mail items that can be delivered despite inconsistent addresses also represent a serious problem since corrective information resulting in corrective action frequently resides in the mind of a mail carrier delivering the mail and, as such, is difficult to capture and use. In this sense, an embodiment of the present invention is aimed first at solving the problem of GI-inconsistent but deliverable addresses.

The PI internal inconsistencies are less troublesome, because they are frequently inconsequential when internal to a company or household delivery process. Since the company or household may successfully correct the internal inconsistency by identifying the proper recipient despite, the presence of an incorrect title or department or internal mail code).

Finally, manifestations of GI-PI mutual inconsistencies are typically addressed by address forwarding systems. This means that GI-PI mutual inconsistencies that result from migration of individuals and businesses can be significantly alleviated when computerized address correction data bases (with consistent PI/GI information) are made accessible to at least large mailers and postal sorting equipment on a near real time basis. This probably takes care of approximately 80% of mail volume that requires forwarding. The remaining approximately 20% is still significant (and according to USPS data may represent about $500 million in unnecessary postal costs), and effectively handling this mail is another object of an embodiment of the present invention.

In summary, an embodiment of the present invention is aimed at alleviating some problems and completely solving other problems of GI-inconsistent but deliverable addresses as well as GI-PI mutual inconsistent addresses. In addition, an embodiment of the present invention is aimed at correcting PI inconsistent addresses.

WO-A-02/093323 discloses a method that provides a notification to the sender or mailer of a mailpiece when the addressee of the mailpiece has changed address. One step in the method includes creation of an updated delivery code that may comprise both the forwarding address of the addressee, the sender's address information, and corresponding barcodes. The postal delivery system sends the mailed item to the forwarding address and provides the sender with the updated information for the addressee. The notification can occur by electronic message systems or delivery of a physical notification.

US 2003/0114955 A1 discloses a mailpiece sorting apparatus, a label printer, a graphical user interface, address cleansing database, corrected address database, sender computer system, sender database and a web server for interconnecting several components of the system. The system provides a closed loop solution for reducing potential return to sender outgoing mailpieces prepared by a sender that is receiving incoming sorting incoming mailpieces sorted by the incoming mail piece sorting apparatus. The system includes user screens including data input screens and report screens. Because of the significant expenses in processing return to sender mail pieces the system tracks and calculate statistical information and cost Information regarding the return to sender mailpieces so that the sender can be charged for the cost of sorting return to sender mailpieces.

US 2003/0057270 A1 discloses an identification system in which an identifier Is located at a specific point on some structure which a reading device registers the specific address when placed in proximity to the physical location, hence simplifying and adding certainty to address location, for purposes of commercial use in the nature of delivery or service calls, personal use, as in identifying locations of houses or structures in unfamiliar locations, or for emergency use, such as by police or firefighters.

According to the present invention, there is provided a method that enables a mailer (sender) computer to automatically receive updated and computerized address information for automatic correction of address data in mailing lists of the mailer as set out in Claims 1 and 2.

The present invention also provides a system comprising a mailer (sender) computer arranged to automatically receive updated and computerized address information for automatic correction of address data in mailing lists of the mailer as set out in Claims 10 and 13.

Optional features are set out in the other claims.
Fig. 1 is a drawing of mail that would be utilized by an embodiment;
Fig. 2 is a drawing of mail box 20 with a Correct Address Information Record (CAIR) label 23;
Fig. 3 is a drawing of CAIR label 23 with information fields PIₗ₋₁ PIₗ, GI;
Fig. 4 is a flow chart of the mail creation process; and
Fig. 5 is a flow chart of the address consistency checking process.

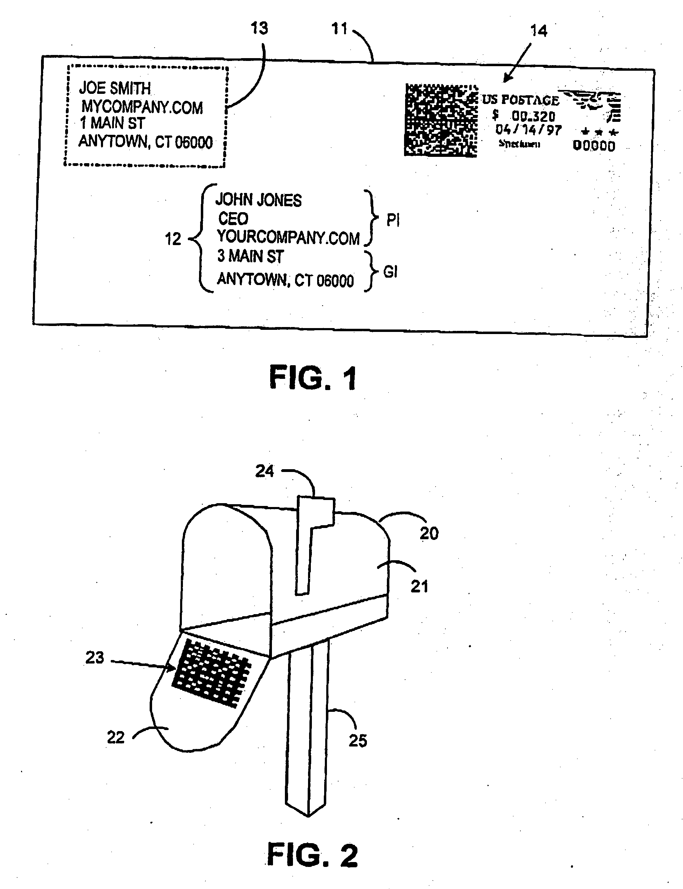

Referring now to the drawings in detail, and more particularly to Fig. 1, the reference character 11 represents mall item, i.e., letter, flat, package, that has a recipient address field 12 that has a PI portion and a GI portion, a SI sender address field 13, and a USPS postal indicia 14.

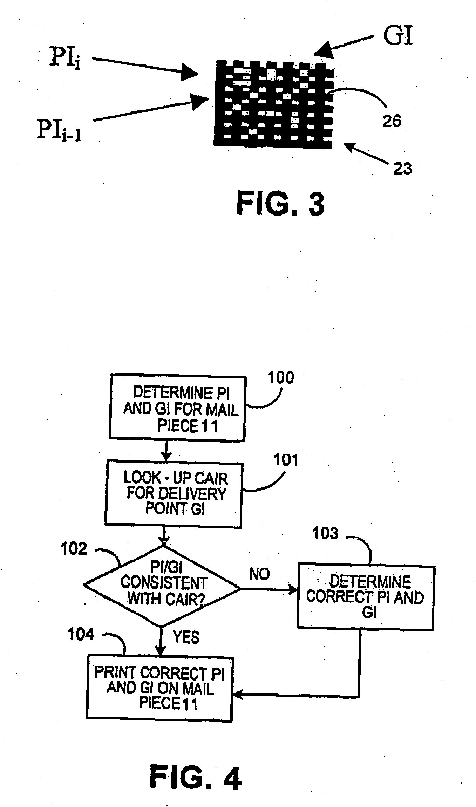

Fig. 2 is a drawing of mail box 20 with a Correct Address Information Record (CAIR) label 23. Mail box 20 has a housing 21 in which mail may be placed and removed, a door 22 having a CAIR label 23 affixed thereto and a mail indicator 24. CAIR label 23 will be more fully described in the description of Fig. 3. Mail box 20 is connected to post member 25.

Fig. 3 is a drawing of Correct Address information Record (CAIR) label 23 with information fields PI_{I-1}, PIₗ , GI. Label 23 has a two-dimensional bar code 26 (such as Data Matrix) containing correct up-to-date PI/GI information (Fig.1). Label 23 may be a Radio Frequency Identification Tag, electronic memory chip, read write memory controllable via wireless communication system from user's computer, etc. In the case of the wireless communication, the memory device will be equipped with an antenna. It should be expressly noted that CAIR information can also reside. in a computer database accessible by a mail carrier, for example, through a wireless connection device such as a cell phone.

Fig. 4 is a flow chart of the mail creation process. The process begins in step 100 where the PI and GI are determined for mail item 11. Then the program goes to block 101 where the CAIR is looked up for GI. Now the program goes to decision block 102. Decision block 102 determines whether or not Pi and GI are consistent with the information obtained from CAIR. If block 102 determines that the PI and GI are not consistent with the information obtained from CAIR, the program goes to block 103 to determine the correct PI and GI. If block 102 determines that the Pi and GI are consistent with the information obtained from CAIR or if block 103 determines the correct PI and GI, the program will go to block 104. Block 104 causes the printing of the correct PI and GI on mail 11.

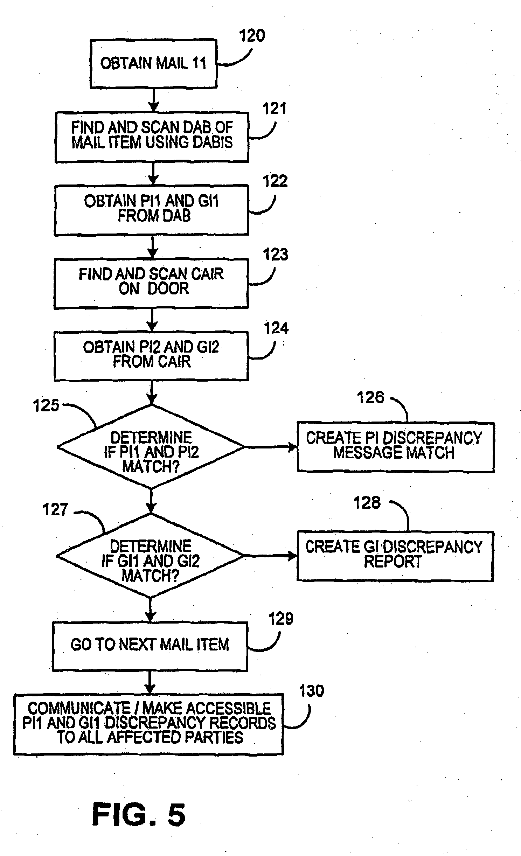

Fig. 5 is a flow chart of the address consistency checking process. The program begins in block 120 where mail 11 is obtained. Then the program goes to block 121 to find and scan the delivery address block of mail item 11 using the delivery address block (dab) information scanner. Now the process continues at block 122 to obtain PI1 and GI1 from the address block data. Next the process goes to block 123, to find and scan CAIR 23 on door 22. Then the process goes to block 124 to obtain P12 and G12 from CAIR 23. Then the process goes to decision block 125 to determine whether PI1 and P12 match. If block 125 determines that PI1 and PI2 do not match, the process goes to block 126 to create a PI discrepancy message. If block 125 determines that PI1 and PI2 match, the program goes to decision block 127 to determine whether or not GI1 and GI2 match. If block 127 determines that GI1 and GI2 do not match, the process goes to block 128 to create a GI discrepancy record. If block 127 determines that GI1 and GI2 match, the process goes to block 129 to obtain the next mail item. Then the program goes to block 130 to communicate and make accessible PI and GI discrepancy records to all affected parties.

GI represents geographical postal address information. PIᵢ represents personal information describing all current mail recipients associated with the postal address GI. PIᵢ₋₁ similarly describes all mail recipients who were associated with the address GI during the immediately preceding period of time. It should be expressly noted that this embodiment may be extended to other preceding periods, i.e., PIᵢ₋₂ or PIᵢ₋₃ as long as it is desired. The USPS and any post in general may use an embodiment as a basis for fee-based services in the case when a previous resident identified by data element PIᵢ₋₁ of the address GI wants to extend mail forwarding period beyond the normally arranged period. When a new resident occupies the dwelling serviced by mail box 20, a new CAIR 23 is computed. One method of computation for CAIR 23 may be a web-based service whereby a new resident enters all required GI and PI into the service web site. The server associated with such web site then computes CAIR including all required and preferred data representation (2D bar code label, RFID and/or other desired storage media), and allows the resident to create a physical representation of the CAIR, for example, by printing a laminated CAIR label 23. Label 23 is then attached by the resident to mail box 20 (Fig. 2). It should be noted that hand-held data capture devices carried by mail carriers, i.e., scanners, are adapted to interpret the data contained in such created CAIR without any additional programming.

It would be obvious to one skilled in the art that CAIR label 23 may be created by the post or by an independent third party as a separate service.

As stated above, the main targets of an embodiment of the present invention are mail items that (a) have internally inconsistent but correctable GI or mutually inconsistent PI and GI and (b) have escaped correction during mail sorting process at mail processing plants due to a lack of corrective computerized information at mail sorting time. These items are transported from mail processing plants to local delivery offices for final delivery. We shall refer to these items as Address Correctable Items or ACI.

All ACI have printed or written or otherwise attached Delivery Address Block Information (DABI). For the purpose of this embodiment, we assume that DABI can be captured automatically, parsed and interpreted by computerized equipment operated by the mail delivery clerk (mail carrier) (and this is the preferred embodiment). In practice, this means that all mail carriers are equipped with hand-held scanners that can capture, parse and interpret DABI. We shall refer to such scanners as Delivery Address Block Information Scanners or DABIS. It should be noted that such scanners are readily available and could be quickly deployed by postal operators.

The system of the present embodiment requires also that all delivery points (mail boxes, businesses or offices locations) have correct computerized PI/GI information uniquely indicative of the delivery point and accessible for automatic capture. This means that when a new inhabitant moves to an existing house or an office building or when a new house or an office building has been built, the local post office creates and distributes to the owner of the house or office or their agents a label (or RFID Tag) or any other appropriate physical record containing correct and computerized PI/GI information. This can be done, for example, by printing laminated adhesive labels with two-dimensional bar code (such as Data Matrix) containing correct up-to-date PI/GI information (Fig.1). We shall refer to this record as Correct Address Information Record or CAIR. The CAIRs can be distributed in many ways: physically using mail; electronically over the Internet; or through a specialized courier. It should be expressly noted that creation, distribution and attachment of CAIRs to mail boxes or other mail receptacles is a one-time activity and does not have to be repeated for every delivery as long as the information in the CAIR is current and consistent. The main purpose of CAIR is to create computerized correct updated PI/GI information at the local level where and when this information is most readily available.

There are two possible cases (based on the USPS delivery system):
Case 1. All mail intended for delivery by a mail carrier responsible for a given carrier route is delivered to a local delivery office already presorted to the walk sequence level. That means that the carrier does not have to sort mail by either casing it or using a piece of automated sorting equipment known in US as Carrier Sequence Bar Code Sorter (CSBCS). In this case, the carrier has only to load already sorted mail into delivery vehicle and deliver mail in accordance to delivery points (stops) along the carrier route. If all delivery receptacles are equipped with CAIRs and all carriers are equipped with DABIS as required, the mail carrier then executes the following process.

For each mail item that is determined by the carrier to have some inconsistent GI or PI/GI information, the carrier first scans mail item with DABIS and then scans CAIR attached to a mail receptacle also using the same DABIS. As a result, two computerized records of the mail item and mail receptacle address data are created in the DABIS. The DABIS can then process these records to identify all inconsistencies according to the flow chart in FIG. 5 and create a correction record or send these records for further processing to the mailer and central postal processing computer (server). In either case, there is a computerized record created that can be used for automatic correction of address data bases, particularly those that are controlled and used by mailer. This is a major aim of this embodiment.

Case 2. All mail intended for delivery by a mail carrier responsible for a given carrier route is delivered to a local delivery office already presorted to the carrier route level. In this case, the carrier would typically use either a manual casing process for sorting mail to walk sequence level or a CSBCS. If carrier uses CSBCS, then the correction process is executed in exactly the same way as it is described in the Case 1 above. If the mail carrier uses a manual casing process, then there is an option to have CAIR labels attached to the individual cases (cells in a cage case) since, in this case, they simply emulate delivery point receptacles. Otherwise, the process proceeds as described in the Case 1.

There are many possible extensions and variations with the method and system of an embodiment. For example, CAIR may contain not only PI of the present, correct owner of the mail receptacle but also the current PI of the previous owner, thus giving additional information to the sender needed for corrective actions. Similarly, CAIR may contain a new GI for the previous owner of the delivery receptacle thus allowing automatic address correction by a mailer for mail that would otherwise require an expensive forwarding process.

There is redundancy in the address. Certain possible addresses are valid. Others are invalid because, for example, the city and postal ZIP code may not match. This is similar to error correction codes. The postal service uses redundancy to correct addresses, If the address is close enough, the mail carrier can deliver it to the correct address. There are four types of consistency:
1. Consistent
2. Automatically correctable
   a. Inconsistent address
   b. Change of address
3. Correctable by the mail carrier through his personal knowledge
4. Uncorrectable

National Change Of Address (NCOA) database will be operatively connected to the mail sorting machine. They use the address to see if the person moved. For each physical mailing address there is one correct mailing address. For each correct mailing address there are many automatically correctable incorrect addresses.

A business could construct an address database using their own customer data and multiple public sources, such as the phone book, credit information, etc. Inconsistencies can arise between elements of the GI. Ultimately, consistency of an address is determined by matching the address to the time-dependent national address database. The national address database can be used to correct class 1 inconsistencies.

If someone moves and does not inform the postal service, the mail carrier may recognize the problem, or a person at the delivery address will return the mail marked with "no such person at this address", or the mail will be discarded by the USPS.

If a change of address form is filled out incorrectly, it can be corrected automatically, or may require manual intervention by the USPS.

The CAIR at a delivery address may have the following information: PI_{I-1}, PI_I and GI. The CAIR alternatively may contain a link to a database containing the information. A mail piece arriving at the destination address has PI, GI and SI (sender information, i.e., address, e-address, etc.)

In the event all mail for a given GI is automatically bundled prior to delivery, the recipient is then the only one who can identify the incorrectly addressed mail. If a RFID tag contains PI/GI, then it can be checked without separating the bundle. Alternatively, the RFID tag attached to the bundle could be only on valuable mail pieces. Alternatively, the bundling system could produce a label with PI/GI information on the bundle.

The system can make use of ID tags (presently printed on the reverse side of the envelope) as uniquely indicative of a mail piece and linked with computerized address information stored in the postal database. In this case, DABIS can simply be used by a mail carrier to scan an ID tag and send this information together with CAIR for further processing to a central postal processor.

A similar process would work for any track and trace number or any unique mail item identifier in general, as long as it is linked with computerized address information stored in the postal or other suitable database. However, ID tags are typically linked only with GI, not PI so that the process using ID tags for this reason currently would be limited only to correcting inconsistencies in the GI portion of the address.

If all information obtained from the DAB and CAIR using the process described can be stored in a computer system typically employed at local delivery post offices, then information in the computer system may be made accessible to all interested users (parties within postal communication system). This can be done via web services or in a number of other ways including service for a fee.

The above specification describes a new and improved method for enabling a mailer to automatically receive updated address information for automatic, real-time correction of address data in mailer's mailing lists. It is realized that the above description may indicate to those skilled in the art additional ways in which the principles of this invention may be used.

## Claims

1. A method that enables a mailer (sender) computer to automatically receive updated and computerized address information for automatic correction of address data in mailing lists of the mailer, said method comprising the steps of:
(A) placing a physical Correct Address Information Record (23) in a recipient mail box (20) or a case used in a manual casing process, the Correct Address Information Record containing correct up-to-date recipient personal and geographic address information (PI, GI) describing all current mail recipients associated with the address, and the Correct Address Information Record being readable by a hand-held data capture device;
(B) creating, by the mailer, mail (11) containing delivery address information (12) that includes a personal and geographic portion of the address;
(C) capturing, by a mail carrier using a hand-held data capture device, the mailer's created delivery address information and the up-to-date personal and geographic address information from the Correct Address Information Record;
(D) comparing, by the hand-held data capture device, the captured mailer's created delivery address information and the captured up-to-date personal and geographic address information;
(E) if the captured mailer's created delivery address information and the captured up-to-date personal and geographic address information do not match, the hand-held data capture device creating a discrepancy message for personal and geographic portions of delivery address information that can be used for automatic, real-time correction of address data in the mailer's mailing lists;
(F) the hand-held data capture device communicating the discrepancy message to the mailer computer; and
(G) the mailer computer correcting address data in the mailer's mailing lists using the discrepancy message.

2. A method that enables a mailer (sender) computer to automatically receive updated and computerized address information for automatic correction of address data in mailing lists of the mailer, said method comprising the steps of:
(A) placing a physical Correct Address Information Record (23) in a recipient mail box (20) or a case used in a manual casing process, the Correct Address Information Record containing correct up-to-date recipient personal and geographic address information (PI, GI) describing all current mail recipients associated with the address, and the Correct Address Information Record being readable by a hand-held data capture device;
(B) creating, by the mailer, mail (11) containing delivery address information (12) that includes a personal and geographic portion of the address;
(C) capturing, by a mail carrier using a hand-held data capture device, the mailer's created delivery address information and the up-to-date personal and geographic address information from the Correct Address Information Record;
(D) the mailer computer receiving the mailer's created delivery address information and the up-to-date personal and geographic address information that have been captured by the hand-held data capture device;
(E) the mailer computer comparing the captured mailer's created delivery address information with the captured up-to-date personal and geographic address information;
(F) if the captured mailer's created delivery address information and the captured up-to-date personal and geographic address information do not match, the mailer computer creating a discrepancy message for personal and geographic portions of delivery address information that can be used for automatic, real-time correction of address data in the mailer's mailing lists; and
(G) the mailer computer correcting address data in the mailer's mailing lists using the discrepancy message.

3. The method claimed in claim 1 or claim 2, wherein the Correct Address Information Record (23) further contains current personal information of the previous owner of the mail box and new geographic information of the previous owner.

4. The method claimed in claim 1 or claim 2, further including the step of: communicating the discrepancy message to a post.

5. The method claimed in claim 1 or claim 2, further including the step of: communicating the discrepancy message to a third party.

6. The method claimed in claim 1 or claim 2, wherein the Correct Address Information Record is in the form of a bar code, radio frequency identification tag, electronic memory chip or read write memory controllable via a wireless communication system from a user's computer.

7. The method claimed in claim 1 or claim 2, wherein the Correct Address information Record is electronically accessible.

8. The method claimed in claim 7, wherein the Correct Address Information Record is accessible over the Internet.

9. The method claimed in claim 7, wherein the Correct Address Information Record is accessible over a cellular phone.

10. A system comprising a mailer (sender) computer arranged to automatically receive updated and computerized address information for automatic correction of address data in mailing lists of the mailer, the system further comprising:
a physical Correct Address Information Record (23) for placement in a recipient mail box (20) or a case used in a manual casing process, the physical Correct Address Information Record (23), containing correct up-to-date recipient personal and geographic address information (PI, GI) describing all current mail recipients associated with an address and being readable by a hand-held capture device; and
a hand-held data capture device arranged to capture (i) delivery address information from a mailpiece (11), the delivery address information including a personal and geographic portion and (ii) the up-to-date recipient personal and geographic address information from the physical Correct Address Information Record,
wherein the hand-held data capture device is further arranged to:
compare the captured address information from the mailpiece and the captured up-to-date personal and geographic address information from the Correct Address Information Record;
if the captured mailer's created delivery address information and the captured up-to-date personal and geographic address information do not match, create a discrepancy message for personal and geographic portions of delivery address information that can be used for automatic, real-time correction of address data in the mailer's mailing lists; and
communicate the discrepancy message to the mailer computer, and
wherein the mailer computer is arranged to correct address data in the mailer's mailing lists using the discrepancy message.

11. The system claimed in claim 10, wherein the Correct Address Information Record (23) further contains current personal information of the previous owner and new geographic information of the previous owner.

12. The system claimed in claim 10 or claim 11, wherein the Correct Address Information Record is in the form of a bar code, radio frequency identification tag, electronic memory chip or read write memory controllable via a wireless communication system from a user's computer.

13. A system comprising a mailer (sender) computer arranged to automatically receive updated and computerized address information for automatic correction of address data in mailing lists of the mailer, the system further comprising:
a physical Correct Address Information Record (23) for placement in a recipient mail box (20) or a case used in a manual casing process, the physical Correct Address Information Record (23) containing the correct up-to-date recipient personal and geographic address information (PI, GI) describing all current mail recipients associated with an address and being readable by a hand-held capture device; and
a hand-held data capture device arranged to:
capture (i) delivery address information from a mailpiece (11), the delivery address information including a personal and geographic portion and (ii) the up-to-date recipient personal and geographic address information from the physical Correct Address Information Record to create computerised records in the hand-held data capture device; and
send the computerised records for further processing to the mailer computer,
wherein the mailer computer is arranged to:
compare the captured address information from the mailpiece (11) and the captured up-to-date personal and geographic address information from the Correct Address Information Record (23);
if the captured mailer's created delivery address information and the captured up-to-date personal and geographic address information do not match, create a discrepancy message for personal and geographic portions of delivery address information that can be used for automatic, real-time correction of address data in the mailer's mailing lists; and
correct address data in the mailer's mailing lists using the discrepancy message.

14. The system claimed in claim 13, wherein the Correct Address Information Record (23) further contains current personal information of the previous owner and new geographic information of the previous owner.

15. The system claimed in claim 13 or claim 14, wherein the Correct Address Information Record is in the form of a bar code, radio frequency identification tag, electronic memory chip or read write memory controllable via a wireless communication system from a user's computer.

## Patentansprüche

1. Verfahren, das einen Postversender- (Versender) Computer befähigt zum automatischen Empfangen einer aktualisierten und computerisierten Adressinformation zur automatischen Korrektur von Adressdaten in Postversandlisten des Postversenders, wobei das Verfahren die Schritte umfasst zum:
(A) Platzieren eines physikalischen Correct-Address-Information-Record (23) in einen Empfängerbriefkasten (20) oder eine in einem manuellen Umhüllungsprozess verwendete Umhüllung, wobei der Correct-Address-Information-Record eine korrekte zeitaktuelle persönliche und geografische Empfängeradressinformation (PI, GI) enthält, die alle mit der Adresse verknüpften aktuellen Postempfänger beschreibt, und wobei der Correct-Address-Information-Record durch eine tragbare Datenerfassungsvorrichtung lesbar ist;
(B) Erschaffen, durch den Postversender, einer Postsendung (11), die eine Zustellungsadressinformation (12) enthält, die einen persönlichen und geografischen Abschnitt der Adresse enthält;
(C) Erfassen, durch einen eine tragbare Datenerfassungsvorrichtung verwendenden Briefträger, der Postversender-erschaffenen Zustellungsadressinformation und der zeitaktuellen persönlichen und geografischen Adressinformation von dem Correct-Address-Information-Record;
(D) Vergleichen, durch die tragbare Datenerfassungsvorrichtung, der erfassten Postversender-erschaffenen Zustellungsadressinformation und der erfassten zeitgemäßen persönlichen und geografischen Adressinformation;
(E) falls die erfasste Postversender-erschaffene Zustellungsadressinformation und die erfasste zeitaktuelle persönliche und geografische Adressinförmation nicht zusammenpassen, Erschaffen, durch die tragbare Datenerfassungsvorrichtung, einer Diskrepanznachricht für persönliche und geografische Abschnitte einer Zustellungsadressinformation, die für eine automatische Echtzeitkorrektur von Adressdaten in den Postversandlisten des Postversenders verwendet werden kann;
(F) wobei die tragbare Datenerfassungsvorrichtung die Diskrepanznachricht an den Postversender-Computer kommuniziert; und
(G) der Postversender-Computer Adressdaten in den Postversandlisten des Postversenders mit Verwendung der Diskrepanznachricht korrigiert.

2. Verfahren, das einen Postversender- (Versender) Computer befähigt zum automatischen Empfangen einer aktualisierten und computerisierten Adressinformation zur automatischen Korrektur von Adressdaten in Postversandlisten des Postversenders, wobei das Verfahren die Schritte umfasst zum:
(A) Platzieren eines physikalischen Correct-Address-Information-Record (23) in einen Empfängerbriefkasten (20) oder eine in einem manuellen Umhüllungsprozess verwendete Umhüllung, wobei der Correct-Address-Information-Record eine korrekte zeitaktuelle persönliche und geografische Empfängeradressinformation (PI, GI) enthält, die alle mit der Adresse verknüpften aktuellen Postempfänger beschreibt, und wobei der Correct-Address-Information-Record durch eine tragbare Datenerfassungsvorrichtung lesbar ist;
(B) Erschaffen, durch den Postversender, einer Postsendung (11), die eine Zustellungsadressinformation (12) enthält, die einen persönlichen und geografischen Abschnitt der Adresse enthält;
(C) Erfassen, durch einen eine tragbare Datenerfassungsvorrichtung verwendenden Briefträger, der Postversender-erschaffenen Zustellungsadressinformation und der zeitaktuellen persönlichen und geografischen Adressinformation von dem Correct-Address-Information-Record;
(D) wobei der Postversender-Computer die Postversender-erschaffene Zustellungsadressinformation und die zeitaktuelle persönliche und geografische Adressinformation empfängt, die durch die tragbare Datenerfassungsvorrichtung erfasst worden sind;
(E) der Postversender-Computer die erfasste Postversender-erschaffene Zustellungsadressinformation mit der erfassten zeitaktuellen persönlichen und geografischen Adressinformation vergleicht;
(F) falls die erfasste Postversender-erschaffene Zustellungsadressinformation und die erfasste zeitaktuelle persönliche und geografische Adressinformation nicht zusammenpassen, der Postversender-Computer eine Diskrepanznachricht für persönliche und geografische Abschnitte einer Zustellungsadressinformation erschafft, die zur automatischen Echtzeitkorrektur von Adressdaten in den Postversandlisten des Postversenders verwendet werden kann; und
(G) der Postversender-Computer Adressdaten in den Postversandlisten des Postversenders mit Verwendung der Diskrepanznachricht korrigiert.

3. Verfahren gemäß Anspruch 1 oder 2, wobei der Correct-Address-Information-Record (23) ferner eine aktuelle persönliche Information des Vorbesitzers des Briefkastens und eine neue geografische Information des Vorbesitzers enthält.

4. Verfahren gemäß Anspruch 1 oder 2 mit ferner dem Schritt zum: Kommunizieren der Diskrepanznachricht an ein Postwesen.

5. Verfahren gemäß Anspruch 1 oder 2 mit ferner dem Schritt zum: Kommunizieren der Diskrepanznachricht an Dritte.

6. Verfahren gemäß Anspruch 1 oder 2, wobei der Correct-Address-Information-Record in der Form eines Barcodes, eines Funkfrequenzidentifizierungsetiketts, eines elektronischen Speicherchips oder eines Schreiblesespeichers ist, steuerbar über ein Drahtloskommunikationssystem von einem Computer eines Benutzers.

7. Verfahren gemäß Anspruch 1 oder 2, wobei der Correct-Address-Information-Record elektronisch zugreifbar ist.

8. Verfahren gemäß Anspruch 7, wobei der Correct-Address-Information-Record über das Internet zugreifbar ist.

9. Verfahren gemäß Anspruch 7, wobei der Correct-Address-Information-Record über ein Mobiltelefon zugreifbar ist.

10. System mit einem Postversender- (Versender) Computer, der angeordnet ist zum automatischen Empfangen einer aktualisierten und computerisierten Adressinformation zur automatischen Korrektur von Adressdaten in Postversandlisten des Postversenders, wobei das System ferner umfasst:
einen physikalischen Correct-Address-Information-Record (23) zur Platzierung in einem Empfängerbriefkasten (20) oder einer in einem manuellen Umhüllungsprozess verwendeten Umhüllung, wobei der physikalische Correct-Address-Information-Record (23) eine korrekte zeitaktuelle persönliche und geografische Empfängeradressinformation (PI, GI) enthält, die alle aktuellen Postempfänger beschreibt, die mit einer Adresse verknüpft sind, und mit einer tragbaren Erfassungsvorrichtung lesbar ist; und
eine tragbare Datenerfassungsvorrichtung, die angeordnet ist zum Erfassen von (i) einer Zustellungsadressinformation von einem Poststück (11), wobei die Zustellungsadressinformation einen persönlichen und geografischen Abschnitt enthält, und von (ii) der zeitaktuellen persönlichen und geografischen Empfängeradressinformation von dem physikalischen Correct-Address-Information-Record,
wobei die tragbare Datenerfassungsvorrichtung ferner angeordnet ist zum:
Vergleichen der erfassten Adressinformation von dem Poststück und der erfassten zeitaktuellen persönlichen und geografischen Adressinformation von dem Correct-Address-Information-Record;
falls die erfasste Postversender-erschaffene Zustellungsadressinformation und die erfasste zeitaktuelle persönliche und geografische Adressinformation nicht zusammenpassen, Erschaffen einer Diskrepanznachricht für persönliche und
geografische Abschnitte einer
Zustellungsadressinformation, die zur automatischen Echtzeitkorrektur von Adressdaten in den Postversandlisten des Postversenders verwendet werden kann; und
Kommunizieren der Diskrepanznachricht an den Postversender-Computer, und
wobei der Postversender-Computer angeordnet ist zum Korrigieren von Adressdaten in den Postversandlisten des Postversenders mit Verwendung der Diskrepanznachricht.

11. System gemäß Anspruch 10, wobei der Correct-Address-Information-Record (23) ferner eine aktuelle persönliche Information des Vorbesitzers des Briefkastens und eine neue geografische Information des Vorbesitzers enthält.

12. System gemäß Anspruch 10 oder 11, wobei der Correct-Address-Information-Record in der Form eines Barcodes, eines Funkfrequenzidentifizierungsetiketts, eines elektronischen Speicherchips oder eines Schreiblesespeichers ist, steuerbar über ein Drahtloskommunikationssystem von einem Computer eines Benutzers.

13. System mit einem Postversender- (Versender) Computer, der angeordnet ist zum automatischen Empfangen einer aktualisierten und computerisierten Adressinformation zur automatischen Korrektur von Adressdaten in Postversandlisten des Postversenders, wobei das System ferner umfasst:
einen physikalischen Correct-Address-Information-Record (23) zur Platzierung in einem Empfängerbriefkasten (20) oder einer in einem manuellen Umhüllungsprozess verwendeten Umhüllung, wobei der physikalische Correct-Address-Information-Record (23) eine korrekte zeitaktuelle persönliche und geografische Empfängeradressinformation (PI, GI) enthält, der alle aktuellen Postempfänger beschreibt, die mit einer Adresse verknüpft sind, und mit einer tragbaren Erfassungsvorrichtung lesbar ist/sind; und
eine tragbare Datenerfassungsvorrichtung, die angeordnet ist zum:
Erfassen von (i) einer Zustellungsadressinformation von einem Poststück (11), wobei die Zustellungsadressinformation einen persönlichen und geografischen Abschnitt enthält, und von (ii) der zeitaktuellen persönlichen und geografischen Empfängeradressinformation von dem physikalischen Correct-Address-Information-Record, um computerisierte Datensätze in der tragbaren Datenerfassungsvorrichtung zu erschaffen; und
Senden der computerisierten Datensätze zur Weiterverarbeitung an den Postversender-Computer,
wobei der Postversender-Computer angeordnet ist zum:
Vergleichen der erfassten Adressinformation von dem Briefstück (11) und der erfassten zeitaktuellen persönlichen und geografischen Adressinformation von dem Correct-Address-Information-Record (23);
falls die erfasste Postversender-erschaffene Zustellungsadressinformation und die erfasste zeitaktuelle persönliche und geografische Adressinformation nicht zusammenpassen, Erschaffen einer Diskrepanznachricht für persönliche und geografische Abschnitte einer Zustellungsadressinformation, die zur automatischen Echtzeitkorrektur von Adressdaten in den Postversandlisten des Postversenders verwendet werden kann; und
Korrigieren von Adressdaten in den Postversandlisten des Postversenders mit Verwendung der Diskrepanznachricht.

14. System gemäß Anspruch 13, wobei der Correct-Address-Information-Record (23) ferner eine aktuelle persönliche Information des Vorbesitzers und eine neue geografische Information des Vorbesitzers enthält.

15. System gemäß Anspruch 13 oder 14, wobei der Correct-Address-Information-Record in der Form eines Barcodes, eines Funkfrequenzidentifizierungsetiketts, eines elektronischen Speicherchips oder eines Schreiblesespeichers ist, steuerbar über ein Drahtloskommunikationssystem von einem Computer eines Benutzers.

## Revendications

1. Procédé qui permet à un ordinateur d'émetteur de courrier (expéditeur) de recevoir automatiquement des informations d'adresse mises à jour et informatisées pour la correction automatique de données d'adresse dans des listes d'émission de courrier de l'émetteur de courrier, ledit procédé comprenant les étapes qui consistent :
(A) à placer un Enregistrement d'Informations d'Adresse Correcte physique (23) dans une boîte aux lettres de destinataire (20) ou un boîtier utilisé dans un processus d'emballage manuel, l'Enregistrement d'Informations d'Adresse Correcte contenant des informations d'adresse géographique et personnelle de destinataire mises à jour correctes (PI, GI) décrivant tous les destinataires de courrier actuels associés à l'adresse, et l'Enregistrement d'Informations d'Adresse Correcte étant lisible par un dispositif de capture de données portatif ;
(B) à créer, par l'émetteur de courrier, un courrier (11) contenant des informations d'adresse de livraison (12) qui comportent une partie personnelle et géographique de l'adresse ;
(C) à capturer, par un facteur utilisant un dispositif de capture de données portatif, les informations d'adresse de livraison créées de l'émetteur de courrier et les informations d'adresse personnelle et géographique mises à jour à partir de l'Enregistrement d'Informations d'Adresse Correcte ;
(D) à comparer, par le dispositif de capture de données portatif, les informations d'adresse de livraison créées de l'émetteur de courrier capturées et les informations d'adresse personnelle et géographique mises à jour capturées ;
(E) à créer, par le dispositif de capture de données portatif, si les informations d'adresse de livraison créées de l'émetteur de courrier capturées et les informations d'adresse personnelle et géographique mises à jour capturées ne correspondent pas, un message de divergence pour des parties personnelles et géographiques d'informations d'adresse de livraison qui peut être utilisé pour la correction en temps réel automatique de données d'adresse dans les listes d'émission de courrier de l'émetteur de courrier ;
(F) à communiquer, par le dispositif de capture de données portatif, le message de divergence à l'ordinateur d'émetteur de courrier ; et
(G) à corriger, par l'ordinateur d'émetteur de courrier, des données d'adresse dans les listes d'émission de courrier de l'émetteur de courrier en utilisant le message de divergence.

2. Procédé qui permet à un ordinateur d'émetteur de courrier (expéditeur) de recevoir automatiquement des informations d'adresse mises à jour et informatisées pour la correction automatique de données d'adresse dans des listes d'émission de courrier de l'émetteur de courrier, ledit procédé comprenant les étapes qui consistent :
(A) à placer un Enregistrement d'Informations d'Adresse Correcte physique (23) dans une boîte aux lettres de destinataire (20) ou un boîtier utilisé dans un processus d'emballage manuel, l'Enregistrement d'Informations d'Adresse Correcte contenant des informations d'adresse personnelle et géographique de destinataire mises à jour correctes (PI, GI) décrivant tous les destinataires de courrier actuels associés à l'adresse, et l'Enregistrement d'Informations d'Adresse Correcte étant lisible par un dispositif de capture de données portatif ;
(B) à créer, par l'émetteur de courrier, un courrier (11) contenant des informations d'adresse de livraison (12) qui comportent une partie personnelle et géographique de l'adresse ;
(C) à capturer, par un facteur utilisant un dispositif de capture de données portatif, les informations d'adresse de livraison créées de l'émetteur de courrier et les informations d'adresse personnelle et géographique mises à jour à partir de l'Enregistrement d'Informations d'Adresse Correcte ;
(D) à recevoir, par l'ordinateur d'émetteur de courrier, les informations d'adresse de livraison créées de l'émetteur de courrier et les informations d'adresse personnelle et géographique mises à jour qui ont été capturées par le dispositif de capture de données portatif ;
(E) à comparer, par l'ordinateur d'émetteur de courrier, les informations d'adresse de livraison créées de l'émetteur de courrier capturées avec les informations d'adresse personnelle et géographique mises à jour capturées ;
(F) à créer, par l'ordinateur d'émetteur de courrier, si les informations d'adresse de livraison créées de l'émetteur de courrier capturées et les informations d'adresse personnelle et géographique mises à jour capturées ne correspondent pas, un message de divergence pour des parties personnelles et géographiques d'informations d'adresse de livraison qui peut être utilisé pour la correction en temps réel automatique de données d'adresse dans les listes d'émission de courrier de l'émetteur de courrier ; et
(G) à corriger, par l'ordinateur d'émetteur de courrier, des données d'adresse dans les listes d'émission de courrier de l'émetteur de courrier en utilisant le message de divergence.

3. Procédé tel que revendiqué dans la revendication 1 ou 2, dans lequel l'Enregistrement d'Informations d'Adresse Correcte (23) contient en outre des informations personnelles actuelles de l'ancien propriétaire de la boîte aux lettres et des nouvelles informations géographiques de l'ancien propriétaire.

4. Procédé tel que revendiqué dans la revendication 1 ou 2, comportant en outre l'étape qui consiste : à communiquer le message de divergence à un poste.

5. Procédé tel que revendiqué dans la revendication 1 ou 2, comportant en outre l'étape qui consiste : à communiquer le message de divergence à un tiers.

6. Procédé tel que revendiqué dans la revendication 1 ou 2, dans lequel l'Enregistrement d'Informations d'Adresse Correcte est sous la forme d'un code à barres, d'une étiquette d'identification par radiofréquence, d'une puce de mémoire électronique ou d'une mémoire de lecture-écriture contrôlable via un système de communication sans fil à partir de l'ordinateur d'un utilisateur.

7. Procédé tel que revendiqué dans la revendication 1 ou 2, dans lequel l'Enregistrement d'Informations d'Adresse Correcte est accessible par voie électronique.

8. Procédé tel que revendiqué dans la revendication 7, dans lequel l'Enregistrement d'Informations d'Adresse Correcte est accessible sur Internet.

9. Procédé tel que revendiqué dans la revendication 7, dans lequel l'Enregistrement d'Informations d'Adresse Correcte est accessible sur un téléphone cellulaire.

10. Système comprenant un ordinateur d'émetteur de courrier (expéditeur) agencé pour recevoir automatiquement des informations d'adresse mises à jour et informatisées pour la correction automatique de données d'adresse dans des listes d'émission de courrier de l'émetteur de courrier, le système comprenant en outre :
un Enregistrement d'Informations d'Adresse Correcte physique (23) pour placer dans une boîte aux lettres de destinataire (20) ou un boîtier utilisé dans un processus d'emballage manuel, l'Enregistrement d'Informations d'Adresse Correcte physique (23) contenant des informations d'adresse personnelle et géographique de destinataire mises à jour correctes (PI, GI) décrivant tous les destinataires de courrier actuels associés à une adresse et étant lisible par un dispositif de capture de données portatif ; et
un dispositif de capture de données portatif agencé pour capturer (i) des informations d'adresse de livraison à partir d'un article de courrier (11), les informations d'adresse de livraison comportant une partie personnelle et géographique et (ii) les informations d'adresse personnelle et géographique de destinataire mises à jour à partir de l'Enregistrement d'Informations d'Adresse Correcte physique,
dans lequel le dispositif de capture de données portatif est en outre agencé :
pour comparer les informations d'adresse capturées à partir de l'article de courrier et les informations d'adresse personnelle et géographique mises à jour capturées à partir de l'Enregistrement d'Informations d'Adresse Correcte (23) ;
pour créer, si les informations d'adresse de livraison créées de l'émetteur de courrier capturées et les informations d'adresse personnelle et géographique mises à jour capturées ne correspondent pas, un message de divergence pour des parties personnelles et géographiques d'informations d'adresse de livraison qui peut être utilisé pour la correction en temps réel automatique de données d'adresse dans les listes d'émission de courrier de l'émetteur de courrier ; et
pour communiquer le message de divergence à l'ordinateur d'émetteur de courrier, et
dans lequel l'ordinateur d'émetteur de courrier est agencé pour corriger des données d'adresse dans les listes d'émission de courrier de l'émetteur de courrier en utilisant le message de divergence.

11. Système tel que revendiqué dans la revendication 10, dans lequel l'Enregistrement d'Informations d'Adresse Correcte (23) contient en outre des informations personnelles actuelles de l'ancien propriétaire et des nouvelles informations géographiques de l'ancien propriétaire.

12. Système tel que revendiqué dans la revendication 10 ou 11, dans lequel l'Enregistrement d'Informations d'Adresse Correcte est sous la forme d'un code à barres, d'une étiquette d'identification par radiofréquence, d'une puce de mémoire électronique ou d'une mémoire de lecture-écriture contrôlable via un système de communication sans fil à partir de l'ordinateur d'un utilisateur.

13. Système comprenant un ordinateur d'émetteur de courrier (expéditeur) agencé pour recevoir automatiquement des informations d'adresse mises à jour et informatisées pour la correction automatique de données d'adresse dans des listes d'émission de courrier de l'émetteur de courrier, le système comprenant en outre :
un Enregistrement d'Informations d'Adresse Correcte physique (23) pour placer dans une boîte aux lettres de destinataire (20) ou un boîtier utilisé dans un processus d'emballage manuel, l'Enregistrement d'Informations d'Adresse Correcte physique (23) contenant les informations d'adresse personnelle et géographique de destinataire mises à jour correctes (PI, GI) décrivant tous les destinataires de courrier actuels associés à une adresse et étant lisible par un dispositif de capture de données portatif ; et
un dispositif de capture de données portatif agencé :
pour capturer (i) des informations d'adresse de livraison à partir d'un article de courrier (11), les informations d'adresse de livraison comportant une partie personnelle et géographique et (ii) les informations d'adresse personnelle et géographique de destinataire mises à jour à partir de l'Enregistrement d'Informations d'Adresse Correcte physique pour créer des enregistrement informatisés dans le dispositif de capture de données portatif ; et
pour envoyer les enregistrements informatisés pour un traitement ultérieur à l'ordinateur d'émetteur de courrier,
dans lequel l'ordinateur d'émetteur de courrier est agencé :
pour comparer les informations d'adresse capturées à partir de l'article de courrier (11) et les informations d'adresse personnelle et géographique mises à jour capturées à partir de l'Enregistrement d'Informations d'Adresse Correcte (23) ;
pour créer, si les informations d'adresse de livraison créées de l'émetteur de courrier capturées et les informations d'adresse personnelle et géographique mises à jour capturées ne correspondent pas, un message de divergence pour des parties personnelles et géographiques d'informations d'adresse de livraison qui peut être utilisé pour la correction en temps réel automatique de données d'adresse dans les listes d'émission de courrier de l'émetteur de courrier ; et
pour corriger des données d'adresses dans les listes d'émission de courrier de l'émetteur de courrier en utilisant le message de divergence.

14. Système tel que revendiqué dans la revendication 13, dans lequel l'Enregistrement d'Informations d'Adresse Correcte (23) contient en outre des informations personnelles actuelles de l'ancien propriétaire et des nouvelles informations géographiques de l'ancien propriétaire.

15. Système tel que revendiqué dans la revendication 13 ou 14, dans lequel l'Enregistrement d'Informations d'Adresse Correcte est sous la forme d'un code à barres, d'une étiquette d'identification par radiofréquence, d'une puce de mémoire électronique ou d'une mémoire de lecture-écriture contrôlable via un système de communication sans fil à partir de l'ordinateur d'un utilisateur.
